# FASCICULE DE BREVET EUROPEEN

(11) **EP 2 917 108 B1**
(45) Date de publication et mention de la délivrance du brevet: **06.07.2016**
(21) Numéro de dépôt: 13801618.3
(22) Date de dépôt: 29.10.2013
(51) Int. Cl.: B64D 27/00, B64D 27/14, B64D 27/20, B64D 33/02, F02C 6/02, F23R 3/20

(54) **AERONEF PROPULSE PAR UN TURBOREACTEUR A SOUFFLANTES CONTRAROTATIVES**
LUFTFAHRZEUG ANGETRIEBEN VON EINER GASTURBINE MIT GEGENLÄUFIGEN GEBLÄSEN
AIRCRAFT PROPELLED BY A GAS TURBINE WITH COUNTERROTATING FANS

(30) Priorité: 08.11.2012 FR 1260597
(43) Date de publication de la demande: 16.09.2015
(73) Titulaire: SNECMA, 75015 Paris (FR)
(72) Inventeur: GALLET, François, F-77550 Moissy-Cramayel Cedex (FR)
(74) Mandataire: Boura, Olivier
(86) Numéro de dépôt international: PCT/FR2013/052583
(87) Numéro de publication internationale: WO 2014/072615

(56) Documents cités:
- EP-A1- 0 272 822
- WO-A1-2010/049610
- FR-A- 1 339 141
- GB-A- 625 802

## Description

### Arrière-plan de l'invention

La présente invention se rapporte au domaine général des aéronefs, et notamment des avions civils, propulsés par un turboréacteur à double flux partiellement intégré au fuselage de l'aéronef.

Les avions civils sont généralement équipés de turboréacteurs montés sous les ailes ou en position arrière sur le fuselage et y sont fixés par l'intermédiaire de pylônes.

Du fait du renchérissement du coût des carburants dans les années à venir, les motoristes cherchent à réduire la consommation de carburant des avions civils. L'une des façons qui est envisagée pour y parvenir est d'encastrer au moins partiellement les moteurs à l'intérieur du fuselage de l'avion pour supprimer les pylônes et les carénages des moteurs, ce qui diminue la masse de l'ensemble propulsif et réduit sa traînée. Les nuisances sonores de l'avion s'en trouvent également limitées.

Par ailleurs, en vol, une couche limite se forme autour du fuselage de l'avion et génère une traînée aérodynamique. Si, par le passé, il a été considéré que les moteurs ne devaient pas ingérer cette couche limite pour éviter une importante distorsion au niveau de la soufflante et des vibrations au niveau des arbres des moteurs, il est à présent considéré que l'absorption d'une partie de cette couche limite par les moteurs permettait de réduire la traînée aérodynamique de l'avion et d'abaisser la vitesse d'admission de l'air dans les moteurs avec un important gain de rendement propulsif.

Le document FR 1 339 141 A montre un avion propulsé par un turboréacteur, le turboréacteur étant intégré à l'arrière d'un fuselage de l'avion dans le prolongement de celui-ci et comprenant deux générateurs de gaz qui alimentent une turbine de travail entraînant une soufflante disposée en aval des générateurs de gaz, et des entrées d'air distinctes pour alimenter chaque générateur de gaz.

Les documents EP 0 272 822 A2 et GB 625 802 A décrivent également des aéronefs propulsés par un turboréacteur.

On connaît ainsi le document WO 2010/049610 qui décrit une architecture d'avion équipé de moteurs dont les nacelles sont partiellement encastrées dans le fuselage de l'avion pour absorber une partie de la couche limite.

### Objet et résumé de l'invention

La présente invention a objet de proposer une autre architecture d'aéronef permettant de réduire les nuisances sonores et la consommation de carburant de l'aéronef en limitant la traînée aérodynamique par absorption de la couche limite.

Ce but est atteint grâce à un aéronef propulsé par un turboréacteur à soufflantes contrarotatives, le turboréacteur étant intégré à l'arrière d'un fuselage de l'aéronef dans le prolongement de celui-ci et comprenant deux générateurs de gaz qui alimentent une turbine de travail ayant deux rotors de turbine contrarotatifs pour entraîner deux soufflantes disposées en aval des générateurs de gaz, et des entrées d'air distinctes pour alimenter chaque générateur de gaz, lesdites entrées d'air étant reliées au fuselage de l'aéronef pour absorber une partie au moins de la couche limite formée autour du fuselage de l'aéronef.

Le turboréacteur de l'aéronef conforme à l'invention est intégré à l'arrière du fuselage dans le prolongement de celui-ci sans recours à un pylône. Ainsi, la traînée aérodynamique induite par ce turboréacteur est réduite. De plus, ce turboréacteur ingère une partie de la couche limite formée autour du fuselage de l'aéronef par l'intermédiaire des entrées d'air, la partie restante de cette couche limite étant ingérée par les soufflantes. La vitesse de la couche limite étant faible, la vitesse d'admission et donc d'éjection du flux gazeux traversant le moteur le sera également. Il en résulte un rendement propulsif élevé et de faibles nuisances acoustiques.

Par ailleurs, la turbine de travail est alimentée par deux générateurs de gaz. Ainsi, en cas de défaillance de l'un des générateurs de gaz, l'autre pourra toujours assurer cette fonction. De même, les soufflantes étant montées en série, en cas de défaillance de l'une d'entre elles, l'autre soufflante prendra le relai.

De préférence, les soufflantes présentent un diamètre externe sensiblement identique au diamètre le plus élevé du fuselage de l'aéronef, ce qui permet d'obtenir un taux de dilution élevé pour un meilleur rendement propulsif. En outre, le fuselage de l'aéronef a tendance à masquer l'entrée d'air des soufflantes, ce qui les protège de l'ingestion de corps étrangers et ce qui limite le bruit rayonné par les soufflantes.

De préférence également, les générateurs de gaz sont disposés dans des veines d'écoulement primaire formant un V entre elles. Ainsi, en cas d'éclatement d'un disque de l'un des générateurs de gaz, aucun débris ne pourra venir impacter l'autre générateur de gaz et les soufflantes.

Les veines d'écoulement primaire peuvent former un angle compris entre 80° et 120° par rapport à un axe longitudinal du fuselage de l'aéronef. La turbine de travail et les soufflantes sont avantageusement centrées sur un axe longitudinal du fuselage de l'aéronef.

De préférence encore, les soufflantes sont carénées par une nacelle fixée sur un empennage vertical de l'aéronef.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et en perspective d'un avion civil conforme à l'invention ; et
- la figure 2 représente le turboréacteur de l'avion de la figure 1 en coupe longitudinale selon II-II.

### Description détaillée de l'invention

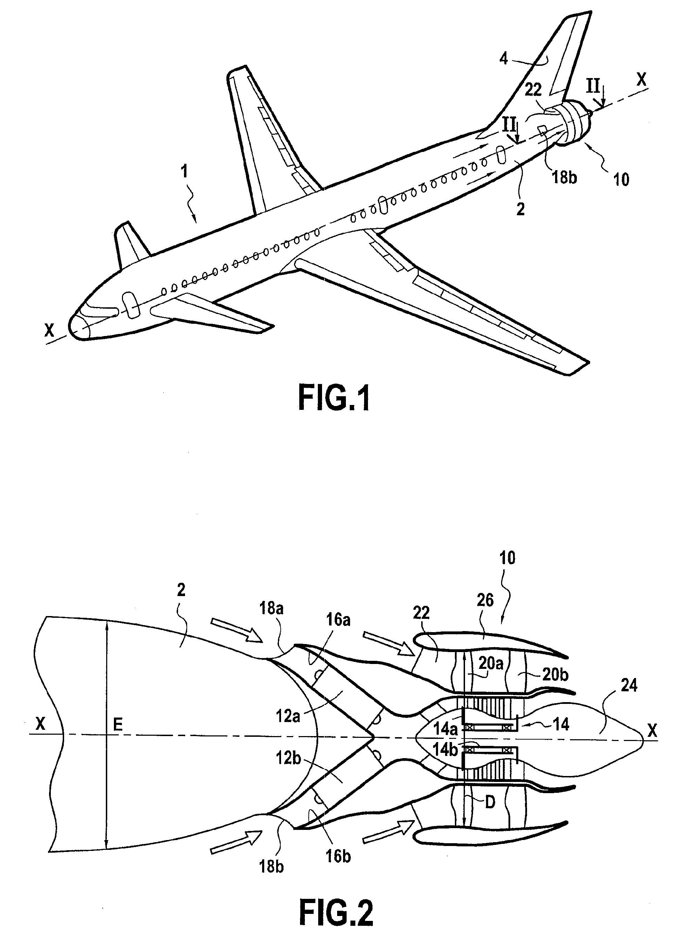

L'invention s'applique à tout aéronef, civil ou militaire, par exemple aux drones et aux avions civils tels que celui représenté sur la figure 1.

La figure 1 représente ainsi un avion civil 1 conforme l'invention. Cet avion est équipé d'un turboréacteur 10 qui est intégré à l'arrière du fuselage 2 de l'avion dans le prolongement de celui-ci.

Comme représenté plus précisément sur la figure 2, le turboréacteur 10 est centré sur un axe longitudinal X-X du fuselage 2 de l'avion. Ce turboréacteur comprend notamment, d'amont en aval dans le sens d'écoulement des gaz, deux générateurs de gaz distincts 12a, 12b montés en parallèle qui alimentent une unique turbine de travail 14.

De façon connue en soi, chaque générateur de gaz 12a, 12b comprend un compresseur basse-pression, un compresseur haute-pression, une chambre de combustion, une turbine basse-pression et une turbine haute-pression (non représentés sur les figures).

De plus, chaque générateur de gaz 12a, 12b est logé à l'intérieur d'une veine d'écoulement primaire 16a, 16b. De préférence, ces deux veines d'écoulement primaire forment entre elles un V ouvert vers l'amont et convergeant sur l'axe longitudinal X-X.

De préférence également, les veines d'écoulement primaire 16a, 16b dans lesquelles sont logés les générateurs de gaz forment un angle compris entre 80° et 120° par rapport à un axe longitudinal du fuselage de l'avion.

Un mélangeur (non représenté sur les figures) est positionné au niveau de la zone de convergence des deux veines d'écoulement primaire 16a, 16b. Ce mélangeur a pour fonction de mélanger les flux gazeux issus des deux générateurs de gaz pour créer un flux gazeux unique homogène à destiné à alimenter la turbine de travail 14.

Des entrées d'air distinctes 18a, 18b pour alimenter chaque générateur de gaz sont également prévues. Ces entrées d'air sont reliées au fuselage 2 de l'avion de façon à absorber une partie au moins de la couche limite formée autour du fuselage de l'avion. Plus précisément, leur paroi interne est directement intégrée au fuselage de l'avion.

La turbine de travail 14 qui est alimentée par les deux générateurs de gaz est munie de deux rotors de turbine 14a, 14b contrarotatifs pour entraîner en rotation de façon contrarotative deux soufflantes 20a, 20b disposées à l'arrière du turboréacteur et montées en série dans une veine d'écoulement secondaire 22. Ces rotors de turbine sont coaxiaux et centrés sur l'axe longitudinal X-X. La turbine de travail 14 est quant à elle logée à l'intérieur d'un structure (non représentée sur les figures) située à l'intérieur du fuselage, ce dernier supportant également un corps central 24 annulaire centré sur l'axe longitudinal X-X.

Les deux soufflantes 20a, 20b sont carénées par une nacelle 26 fixée directement sur l'empennage vertical 4 de l'avion. Ces soufflantes présentent un diamètre externe D qui correspond sensiblement au diamètre E le plus élevé du fuselage 2 de l'avion.

La position arrière des soufflantes et leur important diamètre externe leur permet ainsi d'être alimentées en air par la partie de la couche limite qui n'a pas été absorbée par les générateurs de gaz.

De la sorte, la vitesse d'écoulement de la couche limite étant relativement faible, la vitesse de rotation des soufflantes restera également peu élevée, ce qui permet d'augmenter le rendement propulsif du turboréacteur et d'abaisser ses émissions acoustiques.

De plus, comme la couche limite est aspirée (par les générateurs de gaz et les soufflantes du turboréacteur) et la section frontale de l'avion est faible (le turboréacteur est caché derrière le fuselage de l'avion), la traînée aérodynamique de l'avion est limitée.

On notera que les équipements du turboréacteur (non représentés sur les figures) peuvent être montés autour des générateurs de gaz où de la place est disponible.

On notera également que les principaux problèmes de défaillance du turboréacteur peuvent être évités. En particulier, en cas de défaillance d'un générateur de gaz, l'autre générateur de gaz pourra toujours alimenter la turbine de travail pour produire la poussée nécessaire. De même, en cas d'éclatement d'un disque d'un générateur de gaz, la disposition en V des générateurs de gaz permet d'éviter qu'un débris ne vienne impacter l'autre générateur de gaz ou l'une des soufflantes.

## Revendications

1. Aéronef (1) propulsé par un turboréacteur (10) à soufflantes contrarotatives, le turboréacteur étant intégré à l'arrière d'un fuselage (2) de l'aéronef dans le prolongement de celui-ci et comprenant deux générateurs de gaz (12a, 12b) qui alimentent une turbine de travail (14) ayant deux rotors de turbine (14a, 14b) contrarotatifs pour entraîner deux soufflantes (20a, 20b) disposées en aval des générateurs de gaz, et des entrées d'air (18a, 18b) distinctes pour alimenter chaque générateur de gaz, lesdites entrées d'air étant reliées au fuselage de l'aéronef pour absorber une partie au moins de la couche limite formée autour du fuselage de l'aéronef.

2. Aéronef selon la revendication 1, dans lequel les soufflantes présentent un diamètre externe (D) sensiblement identique au diamètre (E) le plus élevé du fuselage de l'aéronef.

3. Aéronef selon l'une des revendications 1 et 2, dans lequel les générateurs de gaz sont disposés dans des veines d'écoulement primaire (16a, 16b) formant un V entre elles.

4. Aéronef selon la revendication 3, dans lequel les veines d'écoulement primaire forment un angle compris entre 80° et 120° par rapport à un axe longitudinal (X-X) du fuselage de l'aéronef.

5. Aéronef selon l'une quelconque des revendications 1 à 4, dans lequel la turbine de travail et les soufflantes sont centrées sur un axe longitudinal (X-X) du fuselage de l'aéronef.

6. Aéronef selon l'une quelconque des revendications 1 à 5, dans lequel les soufflantes sont carénées par une nacelle (26) fixée sur un empennage vertical (4) de l'aéronef.

## Patentansprüche

1. Luftfahrzeug (1), das durch ein Turbostrahltriebwerk (10) mit gegenläufigen Gebläsen angetrieben wird, wobei das Turbostrahltriebwerk in den hinteren Teil eines Rumpfes (2) des Luftfahrzeugs in dessen Verlängerung integriert ist und zwei Gasgeneratoren (12a, 12b), die eine Arbeitsturbine (14) mit zwei gegenläufigen Turbinenrotoren (14a, 14b) zum Antreiben von zwei den Gasgeneratoren nachgeordneten Gebläsen (20a, 20b) versorgen, sowie getrennte Lufteinlässe (18a, 18b), um jeden Gasgenerator zu versorgen, umfasst, wobei die Lufteinlässe mit dem Rumpf des Luftfahrzeugs verbunden sind, um wenigstens einen Teil der um den Rumpf des Luftfahrzeugs gebildeten Grenzschicht aufzunehmen.

2. Luftfahrzeug nach Anspruch 1, wobei die Gebläse einen Außendurchmesser (D), der mit dem größten Durchmesser (E) des Rumpfes des Luftfahrzeugs im Wesentlichen identisch ist, aufweisen.

3. Luftfahrzeug nach einem der Ansprüche 1 und 2, wobei die Gasgeneratoren in untereinander ein V bildenden Primärströmungskanälen (16a, 16b) angeordnet sind.

4. Luftfahrzeug nach Anspruch 3, wobei die Primärströmungskanäle einen Winkel zwischen 80° und 120° gegenüber einer Längsachse (X -X) des Rumpfes des Luftfahrzeugs bilden.

5. Luftfahrzeug nach einem der Ansprüche 1 bis 4, wobei die Arbeitsturbine und die Gebläse um eine Längsachse (X-X) des Rumpfes des Luftfahrzeugs zentriert sind.

6. Luftfahrzeug nach einem der Ansprüche 1 bis 5, wobei die Gebläse mit einer an einem Seitenleitwerk (4) des Luftfahrzeugs befestigten Gondel (26) ummantelt sind.

## Claims

1. An aircraft (1) propelled by a turbojet (10) having contrarotating fans, the turbojet being incorporated at the rear of a fuselage (2) of the aircraft and in line therewith and comprising two gas generators (12a, 12b) that feed a working turbine (14) having two contrarotating turbine rotors (14a, 14b) for driving two fans (20a, 20b) arranged downstream from the gas generators, and distinct air intakes (18a, 18b) for feeding each gas generator, said air intakes being connected to the fuselage of the aircraft so as to take in at least a portion of the boundary layer formed around the fuselage of the aircraft.

2. An aircraft according to claim 1, wherein the fans present an outside diameter (D) that is substantially identical to the maximum diameter (E) of the fuselage of the aircraft.

3. An aircraft according to claim 1 or claim 2, wherein the gas generators are arranged in primary flow passages (16a, 16b) forming a V-shape between them.

4. An aircraft according to claim 3, wherein each of the primary flow passages lies at an angle in the range 80° to 120° relative to a longitudinal axis (X-X) of the fuselage of the aircraft.

5. An aircraft according to any one of claims 1 to 4, wherein the working turbine and the fans are centered on a longitudinal axis (X-X) of the fuselage of the aircraft.

6. An aircraft according to any one of claims 1 to 5, wherein the fans are ducted by a nacelle (26) fastened to a vertical stabilizer (4) of the aircraft.
